# EUROPÄISCHE PATENTSCHRIFT

(11) **EP 1 960 241 B1**
(45) Veröffentlichungstag und Bekanntmachung des Hinweises auf die Patenterteilung: **27.06.2012**
(21) Anmeldenummer: 06829238.2
(22) Anmeldetag: 01.12.2006
(51) Int. Cl.: B60R 22/02, B60R 22/03

(54) **PERSONENRÜCKHALTESYSTEM**
PASSENGER RESTRAINT SYSTEM
SYSTEME DE RETENUE DE PERSONNES

(30) Priorität: 09.12.2005 DE 102005058790
(43) Veröffentlichungstag der Anmeldung: 27.08.2008
(73) Patentinhaber: AUTOLIV DEVELOPMENT AB, 447 83 Vargarda (SE)
(72) Erfinder: BOSTROM, Ola, S-441 57 Alingsas (SE)
(74) Vertreter: Schön, Thilo
(86) Internationale Anmeldenummer: PCT/EP2006/011567
(87) Internationale Veröffentlichungsnummer: WO 2007/065607

(56) Entgegenhaltungen:
- EP-A2- 1 116 633
- WO-A-2004/009411
- DE-B3- 10 357 368
- GB-A- 2 414 443
- US-A1- 5 123 673

## Beschreibung

### Technisches Gebiet der Erfindung

Die Erfindung betrifft ein Personenrückhaltesystem für einen Sitzplatz in einem Kraftfahrzeug nach dem Oberbegriff des Anspruchs 1.

Das verbreitetste Personenrückhaltesystem in Kraftfahrzeugen ist derzeit der sogenannte 3-Punkt-Gurt. Im angeschnallten Zustand erstreckt sich hierbei das Gurtband von einem oberen Punkt quer über die Brust des Insassen bis zur Öse einer in ein Gurtschloss eingesteckten Gurtzunge und von da über das Becken des Insassen bis zu einer Ankerplatte. Ein solcher 3-Punkt-Gurt bietet sehr guten Schutz bei einem Frontalzusammenstoß und der An- und Abschnallvorgang ist für den Insassen sehr einfach.

### Stand der Technik

Es ist jedoch bekannt, dass ein solcher 3-Punkt-Gurt Schwächen bei Seitencrashs, seitlich versetzten Frontalcrashs und insbesondere bei Unfällen mit einem Überschlag des Kraftfahrzeugs hat. Zur Verbesserung der Sicherheit des Insassen in einer solchen Unfallsituation sind in der Technik sogenannte Mehr-Punkt-Gurte bekannt. Hierzu ist bspw. in der DE 103 57 368 B3 ein Personenrückhältesystem beschrieben, welches aus einem 3-Punkt-Gurt wie oben beschrieben und einem 2-Punkt-Gurt besteht, wobei das Gurtband des 2-Punkt-Gurtes den Brustabschnitt des 3-Punkt-Gurtes kreuzt. 2-Punkt-Gurt und 3-Punkt-Gurt verfügen hierbei jeweils über eine Gurtzunge, die in ein separates Gurtschloss einsteckbar ist. Dies erhöht den Aufwand beim An- und Abschnallen natürlich erheblich.

Aus der GB 2 414 443 A ist ein Fahrzeugsitz mit einem 3-Punkt-Gurt und einem vom 3-Punkt-Gurt unabhängigen Schultergurt bekannt. Der Insasse kann wahlweise nur den 3-Punkt-Gurt oder beide Gurte anlegen.

In der gattungsbildenden EP 1 116 633 A2 ist ein Fahrzeugsitz mit einem 3-Punkt-Gurt und einem weiteren Gurt beschrieben. Dieser weitere Gurt trägt das Gurtschloss für den 3-Punkt-Gurt. Das Gurtschloss kann am Sitz verrastet werden, so dass der 3-Punkt-Gurt konventionell getragen werden kann. Wird das Gurtschloss entrastet, so kommt es im Bereich des Schoßes des Insassen zu liegen und die beiden Gurte bilden eine symmetrische Kreuzkonfiguration.

Das Sicherheitsgurtsystem, welches in der WO 20041009411 A1 beschrieben ist, ähnelt dem Sicherheitsgurtsystem, welches in der EP 1 116 633 A2 vorgeschlagen ist. Hier ist jedoch ausschließüch eine Kreuzkonfiguration als Trageposition vorgesehen. Um das Anschnallen zu erleichtern, wird das Gurtschloss beim Anschnallvorgang am Sitz festgehalten und löst sich nach dem Einrasten der Gurtzunge. Das Gurtschloss wird dann durch Federkräfte in den Aufrollern in eine Position etwa vor der Brust des Insassen gezogen.

### Gegenstand der Erfindung

Hiervon ausgehend ist es Aufgabe der Erfindung, ein Personenrückhaltesystem mit einem 3-Punkt-Gurt und einem 2-Punkt-Gurt dahingehend weiterzubilden, dass der An- und Abschnallvorgang für den Insassen erleichtert wird.

Diese Aufgabe wird durch ein Personenrückhaftesystem mit den Merkmalen des Anspruchs 1 gelöst.

Das erfindungsgemäße Personenrückhaltesystem weist ergänzend zu einem als erstes Gurtband bezeichneten 3-Punkt-Gurt ein zweites Gurtband auf. Hierbei sind beide Enden dieses zweiten Gurtbandes dauerhaft mit dem Kraftfahrzeug verbunden. Das heißt, dass das zweite Gurtband keine Schlosszunge aufweist. Ein unterer Punkt dieses zweiten Gurtbandes ist mit einem Positionierungsmittel verbunden, welches einen ersten und einen zweiten Zustand aufweist. Befindet sich das Positionierungsmittel in seinem ersten Zustand, ist der untere Punkt in einer ausgezogenen oder ausgeschobenen Position; befindet sich das Positionierungsmittel in seinem zweiten Zustand, ist der untere Punkt in einer eingezogenen Position. Das Positionioerungsmittel ist als Stellmittel ausgebildet, welches diesen unteren Punkt aktiv in eine ausgeschobene und eine eingezogene Position bringen kann. Die ausgeschobene/ausgezogene Position dient hierbei zum Anschnallen, während die eingezogene Position im angeschnallten Zustand eingenommen wird. Dieser untere Punkt dieses Gurtbandes ist weiterhin mittelbar oder unmittelbar mit dem Gurtschloss für die Gurtzunge des ersten Gurtbandes verbunden, so dass dieses in der ausgeschobenenlausgezogenen Position für den Insassen leicht erreichbar ist. Der Anschnallvorgang wird hierdurch sehr einfach:
Im Ausgangszustand befindet sich der untere Punkt des Gurtbandes in der ausgeschobenenlausgezogenen Position, wodurch der Insasse leicht mit einer Schulter in das zweite Gurtband einschlaufen kann. Das Gurtschloss für das erste Gurtband befindet sich hierbei in einer leicht zugänglichen Position, so dass auch das Schließen des 3-Punkt-Gurt-Systemes sehr einfach ist. Ist dieses geschlossen, so bringt das Positionierungsmittel den untere Punkt des zweiten Gurtbandes zusammen mit dem Gurtschloss in die eingezogene Position, so dass beide Gurtbänder am Körper anliegen und somit die Rückhaltewirkung zur Verfügung stellen.

Weitere bevorzugte Ausführungsformen ergeben sich aus den Unteransprüchen.

Die Erfindung wir nun anhand von Ausführungsbeispielen mit Bezug auf die Figuren näher erläutert. Hierbei zeigen:

### Kurzbeschreibung der Zeichnungen

- Figur 1: Einen Sitz mit einem Personenrückhaltesystem in geöffneter Stellung,
- Figur 2: das in Figur 1 Gezeigte, wobei die Schlosszunge des ersten Gurtbandes in das dazugehörende Gurtschloss eingesteckt ist,
- Figur 3: das in Figur 2 gezeigte, wobei ein unterer Punkt des zweiten Gurtbandes eingezogen ist,
- Figur 4: eine schematische Darstellung eines zweiten Ausführungsbeispiels der Erfindung.

### Beschreibung bevorzugter Ausführungsformen

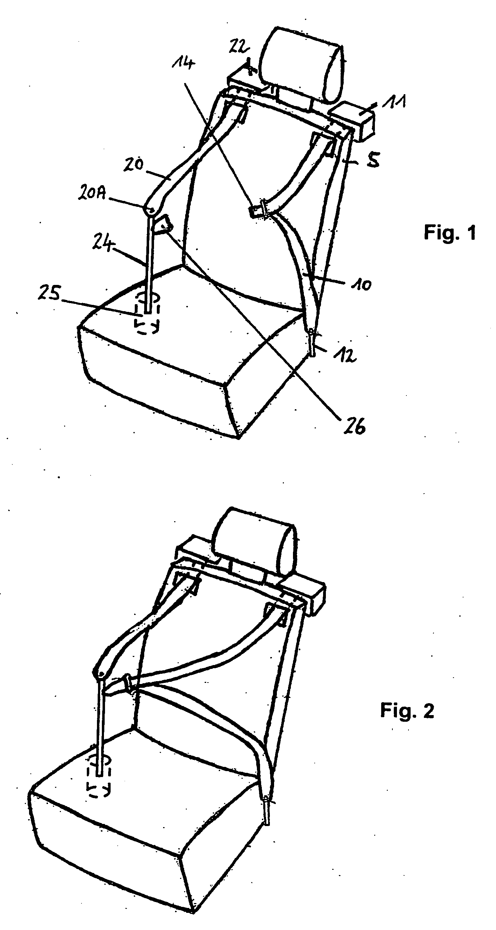

Die Figur 1 bis 3 zeigen ein erstes Ausführungsbeispiel der Erfindung. Hierbei zeigt Figur 1 den Zustand, den der Insasse beim Niedersitzen auf den Fahrzeugsitz 5 vorfindet. Das Sicherheitsgurtsystem weist zwei Gurtbänder - nämlich das erste Gurtband 10 und das zweite Gurtband 20 - auf. Das erste Gurtband 10 gehört zu einem 3-Punkt-Gurtsystem und erstreckt sich von einem als erstes Befestigungselement dienenden ersten Retraktor 11 bis zur als zweites Befestigungselement dienenden Ankerplatte 12. Hierbei erstreckt sich das erste Gurtband 10 wie gewöhnlich durch die Öse einer Gurtzunge 14, welche das Gurtband in zwei Abschnitte, nämlich den Brustabschnitt und den Beckenabschnitt unterteilt. Es ist auch möglich, die Enden dieser beiden Abschnitte starr mit der Gurtzunge zu verbinden. In diesem Fall sollte auch das zweite Befestigungselement als Retraktor ausgebildet sein.

Das zweite Gurtband 20 erstreckt sich von einem als drittes Befestigungselement dienenden zweiten Retraktor 22, welcher auf einer anderen Seite des Sitzes als der erster Retraktor 11 angeordnet ist, bis zu einem biegesteifen Stab 24. Die obersten Punkte der beiden Gurtbänder 10, 20 befinden sich im wesentlichen auf Schulterhöhe eines Insassen.

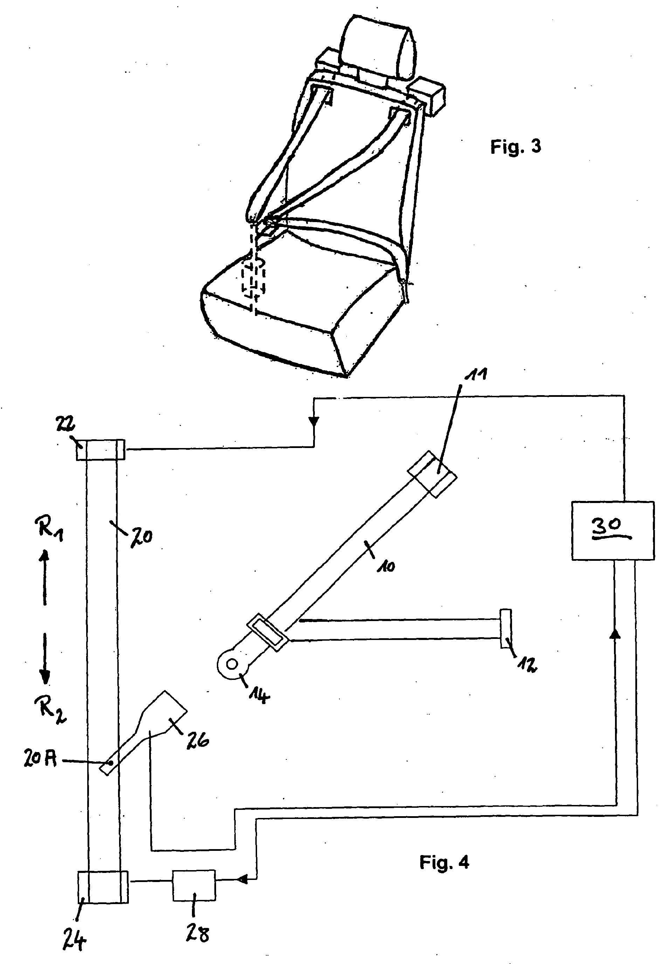

Wie eben erwähnt, ist ein unterer Punkt 20A des zweiten Gurtbandes 20 mit dem als viertes Befestigungselement dienenden biegesteifen Stab 24 verbunden. An diesem biegesteifen Stab 24 ist weiterhin das Gurtschloss 26 befestigt. Die Figur 4 zeigt den biegesteifen Stab 24 in einer ausgeschobenen Position, so dass sich auch der untere Punkt des zweiten Gurtbandes 20 und das Gurtschloss 26 in einer ausgeschobenen Position befinden. Mittels des mit dem biegesteifen Stab 24 verbundenen Linearmotors 25 ist der Stab 24 in eine eingezogene Position überführbar, in der sich auch der untere Punkt 25A des zweiten Gurtbandes 20 und das Gurtschloss 26 in einer eingezogenen Position befinden. Der Linearmotor ist somit ein mittelbar auf den unteren Punkt 20A und das Gurtschloss 26 wirkendes Stellmitel.

Möchte sich ein Insasse anschnallen, so findet er im Sitz 5 mit dem zugehörenden Personenrückhaltesystem im in Figur 1 gezeigten Zustand vor. Er muss dann mit dem - in diesem Fall rechten - Arm in das zweite Gurtband 20 einschlaufen bis ein oberer Abschnitt dieses zweiten Gurtbandes 20 auf der Schulter aufliegt. Anschließend muss er - was in der Regel mit nur einer Hand möglich ist - die Schlosszunge 14 des ersten Gurtbandes 10 in das Gurtschloss 26 einführen, bis der in Figur 2 gezeigte Zustand erreicht ist.

Das Gurtschloss 26 ist mit einem Sensor versehen, der das Einstecken der Schlosszunge 14 in das Gurtschloss 26 sensiert. Sobald dieser Zustand sensiert ist, wird der Linearmotor 25 betätigt und der Stab 24 zusammen mit dem unteren Punkt 20A des zweiten Gurtbandes und dem Gurtschloss 26 eingezogen, bis die in Figur 3 dargestellte eingezogene Position vorlegt. Unterer Punkt 20A und Gurtschloss 26 sind also in eine erste Position ausschiebbar und in eine zweite Position einziehbar.

Figur 4 zeigt ein zweites Ausführungsbeispiel. Es unterscheidet sich vom ersten Ausführungsbeispiel in erster Linie dadurch, dass das vierte Befestigungselement in diesem Ausführungsbeispiel nicht durch einen Stab, sondern durch eine Gurtspule 24 gebildet ist, die vom Rotationsmotor 28 als Stellmittel antreibbar ist. Die ausgeschobene Stellung wird dadurch erreicht, dass die Gurtspule 24 des Rotationsmotor 28 in eine erste Drehrichtung angetrieben wird, so dass das zweite Gurtband 20 in Richtung R₁ ausgeschoben wird. Gleichzeitig wird der zweite Retraktor 22 durch die Steuerungseinheit 30 blockiert, so dass sich das zweite Gurtband 20 lose zwischen zweitem Retraktor 22 (der hier das dritte Befestigungselement bildet) und Gurtspule 27 erstreckt. Wird nun die Schlosszunge 14 in das Gurtschloss 26 gesteckt, so sendet dieses ein Signal die Steuerungseinheit 30. Diese wiederum hebt die Blockierung des zweiten Retraktors auf und treibt den Rotationsmotor 28 in eine zweite Drehrichtung an, so dass das zweite Gurtband 20 in Richtung R₂ eingezogen wird und sich der untere Punkt des zweiten Gurtbandes und das Gurtschloss 26 in einer eingezogenen Position befinden.

Die die zweiten Befestigungselemente bildenden Ankerplatten 12 der beiden Ausführungsbeispiele können auch als weitere Retraktoren ausgebildet sein. den unteren Punkt zusammen mit dem Gurtschloss in die eingezogene Position (zweiter Zustand des Positionierungsmittels). Es ist möglich, ein Verriegelungselement vorzusehen, das die Gurtspule im ersten Zustand verriegelt, bis die Gurtzunge 14 in das Gurtschloss 26 eingesteckt ist.

Die die zweiten Befestigungselemente bildenden Ankerplatten 12 der beiden Ausführungsbeispiele können auch als weitere Retraktoren ausgebildet sein.

### Bezugszeichenliste

- 10: erstes Gurtband
- 11: erster Retraktor
- 12: Ankerplatte
- 14: Schlosszunge
- 20: zweites Gurtband
- 20A: unterer Punkt
- 22: zweiter Retraktor
- 24: Stab
- 25: Linearmotor
- 26: Gurtschloss
- 27: Gurtspule
- 28: Rotationsmotor
- 30: Steuerungseinheit

## Patentansprüche

1. Personenrückhaltesystem für einen Sitzplatz in einem Kraftfahrzeug mit:
- einem ersten Gurtband (10), welches sich von einem ersten zu einem zweiten mit dem Kraftfahrzeug verbundenen Befestigungselement erstreckt, wobei das erste Gurtband (10) durch eine in ein Gurtschloss einsteckbare Schlosszunge (14) in zwei Abschnitte unterteilt wird,
- einem sich von einem dritten mit dem Kraftfahrzeug verbundenen Befestigungselement erstreckenden zweiten Gurtband (20), welches zu einem vierten mit dem Kraftfahrzeug verbundenen Befestigungselement verläuft, und
- einem auf einen unteren Punkt (20A) des zweiten Gurtbandes wirkenden Positionierungsmittel, das in einem ersten Zustand den unteren Punkt (20A) in eine ausgeschobene/ausgezogene und in einem zweiten Zustand den unteren Punkt (20A) in eine eingezogene Position bringen kann, wobei das Gurtschloss (26) mit dem unteren Punkt (20A) des zweiten Gurtbands dauerhaft verbunden ist,
**dadurch gekennzeichnet, dass** das Positionierungsmittel als Stellmittel ausgebildet ist, welches auf ein elektrisches Signal hin diesen unteren Punkt in eine ausgeschobene und eine eingezogene Position bringen kann und dass die ausgeschobenelausgezogene Position dem Anschnallzustand und die eingezogene Position dem angeschnallten Zustand entspricht.

2. Personenrückhaltesystem nach Anspruch 1, **dadurch gekennzeichnet, dass** das vierte Befestigungselement eine elektromotorisch antreibbare Gurtspule (24) ist.

3. Personenrückhaltesystem nach Anspruch 1, **dadurch gekennzeichnet, dass** das vierte Befestigungselement ein elektromotorisch antreibbares biegesteifes Element ist.

4. Personenrückhaltesystem nach einem der vorangehenden Ansprüche, **dadurch gekennzeichnet, dass** das dritte Befestigungselement als Retraktor (22) ausgebildet ist

5. Personenrückhaltesystem nach Anspruch 2 oder Anspruch 3 und nach Anspruch 4, **dadurch gekennzeichnet, dass** der Retraktor auf ein externes Signal hin blockiert werden kann.

6. Personenrückhaltesystem nach einem der vorangehenden Ansprüche, **dadurch gekennzeichnet, dass** das erste Befestigungselement ein Retraktor ist.

7. Personenrückhaltesystem nach einem der vorangehenden Ansprüche, **dadurch gekennzeichnet, dass** das zweite Befestigungselement ein Retraktor ist.

## Claims

1. Passenger restraint system for a seat in a motor vehicle, comprising:
- a first belt strap (10) which extends from a first fastening element to a second fastening element connected to the motor vehicle, wherein the first belt strap (10) is divided into two sections by a buckle latch (14) which can be inserted into a belt buckle,
- a second belt strap (20) which extends from a third fastening element connected to the motor vehicle and runs to a fourth fastening element connected to the motor vehicle, and
- a positioning means which acts on a lower point (20A) of the second belt strap and which, in a first state, can bring the lower point (20A) into a pushed-out/extended position and, in a second state, can bring the lower point (20A) into a retracted position, wherein the belt buckle (26) is permanently connected to the lower point (20A) of the second belt strap,
**characterised in that** the positioning means is configured as an adjusting means which, in response to an electrical signal, can bring this lower point into a pushed-out position and a retracted position, and **in that** the pushed-out/extended position corresponds to the buckling state and the retracted position corresponds to the buckled state.

2. Passenger restraint system according to claim 1, **characterised in that** the fourth fastening element is a belt reel (24) which can be driven by an electric motor.

3. Passenger restraint system according to claim 1, **characterised in that** the fourth fastening element is a rigid element which can be driven by an electric motor.

4. Passenger restraint system according to one of the preceding claims, **characterised in that** the third fastening element is configured as a retractor (22).

5. Passenger restraint system according to claim 2 or claim 3 and according to claim 4, **characterised in that** the retractor can be locked in response to an external signal.

6. Passenger restraint system according to one of the preceding claims, **characterised in that** the first fastening element is a retractor.

7. Passenger restraint system according to one of the preceding claims, **characterised in that** the second fastening element is a retractor.

## Revendications

1. Système de maintien d'une personne pour un siège d'un véhicule automobile, comportant :
- une première sangle de ceinture de sécurité (10), qui s'étend d'un premier à un deuxième élément de fixation raccordé au véhicule automobile, la première sangle de ceinture de sécurité (10) étant subdivisée en deux tronçons par une languette de bouclage (14) enfichable dans une boucle de ceinture de sécurité,
- une deuxième sangle de ceinture de sécurité (20) s'étendant depuis un troisième élément de fixation raccordé au véhicule automobile, vers un quatrième élément de fixation raccordé au véhicule automobile, et
- un moyen de positionnement agissant sur un point inférieur (20A) de la deuxième sangle de ceinture de sécurité, lequel peut dans un premier état amener le point inférieur (20A) vers une position de sortie/d'extraction et dans un deuxième état amener le point inférieur (20A) vers une position de retrait, la boucle de ceinture de sécurité (26) étant durablement raccordée au point inférieur (20A) de la deuxième sangle de ceinture de sécurité,
**caractérisé en ce que** le moyen de positionnement est réalisé comme un moyen de réglage qui, en réponse à un signal électrique, peut amener ledit point inférieur vers une position de sortie et une position de retrait, et **en ce que** la position de sortie/d'extraction correspond à l'état de bouclage, et la position de retrait à l'état de maintien.

2. Système de maintien d'une personne selon la revendication 1, **caractérisé en ce que** le quatrième élément de fixation est une bobine de ceinture de sécurité (24) entraînable par moteur électrique.

3. Système de maintien d'une personne selon la revendication 1, **caractérisé en ce que** le quatrième élément de fixation est un élément rigide entraînable par moteur électrique.

4. Système de maintien d'une personne selon l'une des revendications précédentes, **caractérisé en ce que** le troisième élément de fixation est réalisé comme rétracteur (22).

5. Système de maintien d'une personne selon la revendication 2 ou la revendication 3 et selon la revendication 4, **caractérisé en ce que** le rétracteur peut être bloqué en réponse à un signal externe.

6. Système de maintien d'une personne selon l'une des revendications précédentes, **caractérisé en ce que** le premier élément de fixation est un rétracteur.

7. Système de maintien d'une personne selon l'une des revendications précédentes, **caractérisé en ce que** le deuxième élément de fixation est un rétracteur.
